# EUROPEAN PATENT APPLICATION

(11) **EP 3 950 852 A1**
(43) Date of publication of application: **09.02.2022**
(21) Application number: 20777344.1
(22) Date of filing: 24.03.2020
(51) Int. Cl.: C09B 69/02, C09D 11/17, B43K 7/00, B43K 8/02, C09B 67/46

(54) **AQUEOUS INK COMPOSITION FOR WRITING INSTRUMENTS**

(30) Priority: 28.03.2019 JP 2019063278
(71) Applicant: MITSUBISHI PENCIL COMPANY, LIMITED, Tokyo 140-8537 (JP)
(72) Inventor: HAGA Hisato, Tokyo 140-8537 (JP)
(74) Representative: Vossius & Partner Patentanwälte Rechtsanwälte mbB
(86) International application number: PCT/JP2020/013006
(87) International publication number: WO 2020/196517

(57) **Abstract**

Provided is an aqueous ink composition using colored resin particles with excellent color development suitable for writing instruments such as felt-tip pens, marking pens, and ballpoint pens. The aqueous ink composition for writing instruments of the present invention includes colored resin particles colored by a salt-forming dye, which is a salt-forming body of an acid dye and a basic dye.

## Description

### Technical Field

The present invention relates to an aqueous ink composition using colored resin particles with excellent color development suitable for writing instruments such as felt-tip pens, marking pens, and ballpoint pens.

### Background Art

It has been widely known that a resin emulsion having a specific polymer composition dyed with a dye is used as a coloring material that may be called a pseudo pigment.

For example, an aqueous ink composition for writing instruments at least containing a colored resin emulsion obtained by dyeing a resin emulsion with a dye that can dye the resin emulsion, in which the colored resin emulsion is dyed with using polyoxyethylene styrenated phenyl ether (e.g., see Patent Document 1 of the present application) has been known.

However, when the colored resin particles described in Patent Document 1 above are produced, there are no disclosure or recognition of colored resin particles obtained by using a salt-forming dye having a structure including an acid dye and a basic dye.

The colored resin particles can be colored with various dyes; however, there is a problem of the upper limit of the amount of the dyes that can be included in the particles depending on the types of the dyes. As an overall trend, the upper limit for the amount of the acid dye is actually low. Therefore, even when an acid dye with excellent color development performance is used as a colorant for colored resin particles, the characteristic thereof may not be fully seen. Colored resin particles having further superior color development is desired.

### Citation List

### Patent Document

Patent Document 1: JP 2017-002121 A (e.g., Claims, Examples)

### Summary of Invention

### Technical Problem

In light of the problems described above and the current circumstances, the present invention is to solve such problems, and an object of the present invention is to provide an aqueous ink composition using colored resin particles with excellent color development suitable for writing instruments such as felt-tip pens, marking pens, and ballpoint pens, and writing instruments charged with the aqueous ink composition.

### Solution to Problem

In light of the problems described above, the present inventor has conducted diligent research, and found that, by using a salt-forming dye having a structure of an acid dye and a basic dye, the subject aqueous ink composition for writing instruments and the like of the above-described object can be obtained without impairing the characteristics of the acid dye, which has good color development, and thus completed the present invention.

That is, the aqueous ink composition for writing instruments according to the present invention contains a colored resin particle colored by a salt-forming dye, which is a salt-forming body of an acid dye and a basic dye.

A writing instrument according to the present invention is characterized by being charged with the aqueous ink composition for writing instruments described above.

### Advantageous Effects of Invention

According to the present invention, an aqueous ink composition for writing instruments with excellent color development suitable for writing instruments such as felt-tip pens, marking pens, and ballpoint pens, and writing instruments charged with the aqueous ink composition can be provided.

### Description of Embodiments

An embodiment of the present invention is described below in detail. The aqueous ink composition for writing instruments of the present invention contains colored resin particles colored by a salt-forming dye, which is a salt-forming body of an acid dye and a basic dye.

### Salt-forming dye

The salt-forming dye, which is the salt-forming body (salt-forming compound) of an acid dye and a basic dye, used in the present invention is a compound obtained by reacting the acid dye and the basic dye, and both of the acid dye and the basic dye have excellent spectral characteristics and color purity, while they do not impair the characteristics of excellent color development of the acid dye, a raw material. It is advantageous in that spectral adjustment as a salt-forming body can be made by combining an acid dye and a basic dye.

Furthermore, in the present invention, unlike inorganic salts of an acid dye having an acid group such as sulfonic acid or carboxylic acid, which are derivatives of acid dyes, salts of an acid dye and a nitrogen-containing compound, or amide compounds such as sulfonamide of an acid dye, the salt-forming body of the acid dye and the basic dye is a compound obtained by a chemical (salt-forming) reaction of the acid dye in which a dye ion is anionic and the basic dye in which a dye ion is cationic, and thus has a significantly rigid structure and chemical stability.

Therefore, in the case where a salt-forming dye formed from the salt-forming compound of an acid dye and a basic dye is used as a coloring material of the colored resin particles, unlike the case where a mixture of dyes is used, the salt-forming dye can function as a chemically stable compound, and thus excellent spectral characteristics and color purity of each of the acid dye and the basic dye are not impaired, and colored resin particles having excellent color development and having excellent lightness can be obtained.

Furthermore, due to the structural stability, spectral characteristics with excellent heat resistance and light resistance are observed. In addition, because each of the acid dye and the basic dye has excellent spectral characteristics and color purity without impairing the characteristics of the acid dye having good color development, which is a starting material of the salt-formation reaction, optional spectral adjustment can be made by changing the combination of starting materials for the salt-formation reaction. Furthermore, because water resistance etc. is imparted by forming the salt-forming compound, dispersibility in a solvent containing water becomes excellent.

The acid dye used in the present invention is a water-soluble dye having an acid group, such as a sulfonic acid group or a carboxyl group, or a structure of a salt thereof in a molecule of the dye. Among acid dyes, there are direct dyes as classified, which have a large molecular weight and a planar structure. The salt-forming compound of a direct dye and a basic dye has especially superior heat resistance, and by suitably selecting monomer types of the resin particles to be used for the colored resin particles, excellent color development and heat resistance can be achieved.

Examples of the direct dye that can be used include azo-based dyes, thiazole-based dyes, anthraquinone-based dyes, oxazine-based dyes, and phthalocyanine-based dyes. Examples of the dyes that can be used are listed below by color index (C.I.) number.

Examples of the azo dye include C.I. Direct Yellow 2, 33, 34, 35, 39, 50, 69, 70, 71, 86, 93, 94, 95, 98, 102, 109, 129, 136, 141;
C.I. Direct Orange 41 ,46, 56, 61, 64, 70, 96, 97, 106, 107;
C.I. Direct Red 79, 82, 83, 84, 97, 98, 99, 106, 107, 172, 173, 176, 177, 179, 181, 182, 204, 207, 211, 213, 218, 221, 222, 232, 233, 243, 246, 250;
C.I. Direct Violet 47, 52, 54, 60, 65, 66, 79, 80, 81, 82, 84, 89, 90, 93, 95, 96, 103, 104;
C.I. Direct Blue 51, 57, 71, 81, 84, 85, 90, 93, 94, 95, 98, 100, 101, 113, 149, 150, 153, 160, 162, 163, 164, 166, 167, 170, 172, 188, 192, 193, 194, 196, 198, 200, 207, 209, 210, 212, 213, 214, 222, 228, 229, 237, 238, 242, 243, 244, 245, 247, 248, 250, 251, 252, 256, 257, 259, 260, 268, 274, 275; and
C.I. Direct Green 27, 34, 37, 65, 67, 68, 69, 72, 77, 79, 82. Examples of the thiazole dye include C.I. Direct Yellow 54.

Examples of the oxazine dye include C.I. Direct Blue 97, 99, 106, 107, 108, 109, 190, 293.

Examples of the anthraquinone dye include C.I. Direct Blue 77. Examples of the phthalocyanine dye include C.I. Direct Vlue 86, 87, 189, 199.

Examples of other direct dye include C.I. Direct Yellow 38, 43, 47, 58, 68, 108, 138; C.I. Direct Orange 34, 39, 50, 52, 57, 65, 68; CI. Direct Red 91, 92, 96, 105, 184, 220, 234, 241; C.I. Direct Violet 59; C.I. Direct Blue 80, 114, 115, 117, 119, 137, 155, 156, 158, 159, 161, 171, 173; and C.I. Direct Green 25, 31, 32, 63, 66.

As the acid dye other than the direct dyes, azo dyes, xanthene dyes, phthalocyanine dyes, anthraquinone dyes, quinoline dyes, azine dyes, and indigoid dyes can be used.

Examples of the azo dye include C.I. Acid Red 1, 3, 4, 6, 8, 11, 12, 14, 18, 26, 27, 33, 37, 53, 57, 88, 106, 108, 111, 114, 131, 137, 138, 151, 154, 158, 159, 173, 184, 186, 215, 257, 266, 296, 337;
C.I. Acid Orange 7, 10, 12, 19, 20, 22, 28, 30, 52, 56, 74, 127;
C.I. Acid Violet 11, 56, 58;
C.I. Acid Yellow 1, 6, 6C, 17, 18, 23, 25, 36, 38, 42, 44, 54, 59, 72, 78, 151;
C.I. Acid Brown 2, 4, 13, 248; and
C.I. Acid Blue 92, 102, 113, 117.

Examples of the xanthene dye include C.I. Acid Red 50, 51, 52, 87. Examples of the phthalocyanine dye include C.I. Acid Blue 249. Examples of the anthraquinone dye include C.I. Acid Red 82, 92; C.I. Acid Violet 41, 42, 43; C.I. Acid Blue 14, 22, 25, 40, 45, 78, 80, 127:1, 129, 145, 167, 230; and C.I. Acid Green 25, 27.

Examples of the quinoline dye include C.I. Acid Yellow 3.

The azine dye include C.I. Acid Blue 59, 102.

Examples of the indigoid dye include C.I. Acid Blue 74.

Examples of other dye include C.I. Acid Violet 49; C.I. Acid Brown 19; C.I. Acid Blue 7, 9, 74, 112, 126, 167; and C.I. Acid Green 9.

The basic dye used in the present invention is a dye that has a basic group, such as an amino group or an imino group, or a structure of a salt thereof in a molecule and that becomes cationic in an aqueous solution.

Examples of the basic dye that can be used include at least one of basic dyes such as di-and triarylmethane dyes; quinoneimine dyes such as azine dyes (including nigrosine), oxazine dyes, and thiazine dyes; xanthene dyes; triazoleazo dyes; thiazoleazo dyes; benzothiazoleazo dyes; azo dyes; methine dyes such as polymethine dyes, azomethine dyes, or azamethine dyes; anthraquinone dyes; phthalocyanine dyes; acridine dyes; rhodamine dyes; or triarylmethane dyes. Preferably, the water-soluble basic dyes are desired.

Specific examples of the yellow basic dye that can be used include dyes listed as color indexes C.I.Basic Yellow 1, 2, 9, 11, 12, 13, 14, 15, 19, 21, 23, 24, 25, 28, 29, 32, 33, 34, 35, 36, 40, 41, 51, 63, 73, 80. Furthermore, examples of the commercially available yellow basic dye include AIZEN CATHILON YELLOW GPLH and Spillon Yellow C-GNH-new (trade names, available from Hodogaya Chemical Co., Ltd.).

Examples of the orange basic dye include dyes listed as color indexes C.I. Basic Orange 1, 2, 7, 14, 15, 21, 22, 23, 24, 25, 30, 32, 33, 34.

Examples of the red basic dye include dyes listed as color indexes C.I. Basic Red -1, -2, -3, -4, -8, -9, -12, -13, -14, -15, -16, -17, -18, -22, -23, -24, -25, -26, -27, -29, -30, -32, -34, -35, -36, - 37, -38, -39, -40, -41, -42, -43, -46, -49, -50, -51, -52, -53. Furthermore, examples of the commercially available red basic dye include AIZEN CATHILON RED BLH and AIZEN CATHILON RED RH (trade names: available from Hodogaya Chemical Co., Ltd.), Diacryl Supra Brilliant Red 2G (trade name, available from Mitsubishi Chemical Corporation), and Sumiacryl Red B (trade name, available from Sumitomo Chemical Co., Ltd.).

Examples of the purple basic dye include dyes listed as color indexes C.I. Basic Violet 1, 2, 3, 4, 5, 6, 7, 8, 10, 11, 11:1, 12, 13, 14, 15, 16, 18, 21, 23, 24, 25, 26, 27, 28, 29, 33, 39.

Examples of the blue basic dye include dyes listed as color indexes C.I. Basic Blue 1, 2, 3, 5, 6, 7, 8, 9, 15, 18, 19, 20, 21, 22, 24, 25, 26, 28, 29, 33, 35, 37, 40, 41, 42, 44, 45, 46, 47, 49, 50, 53, 54, 58, 59, 60, 62, 63, 64, 65, 66, 67, 68, 69, 70, 71, 75, 77, 78, 79, 82, 83, 87, 88. Furthermore, examples of the commercially available blue basic dye include AIZEN CATHILON TURQUOISE BLUE LH (trade name, available from Hodogaya Chemical Co., Ltd.).

Examples of the green basic dye include dyes listed as color indexes C.I. Basic Green 1, 4, 6, 10. Furthermore, examples of the commercially available green basic dye include Diacryl Supra Brilliant Green 2GL (trade name, available from Mitsubishi Chemical Corporation).

Examples of the brown basic dye include dyes listed as color indexes C.I.Basic Brown 1, 2, 4, 5, 7, 11, 12, 13, 15. Furthermore, examples of the commercially available brown basic dye include Janus Brown R (trade name, available from Nippon Chemical Industrial Co., Ltd.) and AIZEN CATHILON BROWN GH (trade name, available from Hodogaya Chemical Co., Ltd.).

Examples of the black basic dye include dyes listed as color indexes C.I.Basic Black 1, 2, 3, 7, 8; and nigrosine basic dyes.

In the present invention, as the production method of the salt-forming dye, which is the salt-forming body of the acid dye and the basic dye, a known method can be employed. For example, a predetermined salt-forming dye can be obtained by preparing an acid dye aqueous solution and a basic dye aqueous solution separately, mixing and agitating them together, filtering the salt-forming body, and drying the recovered deposit.

Furthermore, at the time of producing the colored resin particles, production of the salt-forming body by mixing the acid dye and the basic dye and synthesis of the colored resin particles can be continuously performed.

In the present invention, the salt-forming dye formed from the salt-forming compound of the direct dye and the basic dye can be used alone, or a combination of two or more types of the salt-forming dyes formed from the salt-forming compounds can be used.

Furthermore, in the present invention, a commercially available salt-forming dye, which is the salt-forming body of the acid dye and the basic dye, can be used. In addition, a salt-forming dye synthesized by using commercially available acid dye and basic dye can be also used.

Examples of the commercially available product include VALIFAST RED 1308 (salt-forming body of C.I. Acid Yellow 23 and C.I. Basic Red 1), VALIFAST RED 1320 (salt-forming body of C.I. Acid Yellow 42 and C.I. Basic Red 1), VALIFAST RED 1355 and 1388 (both salt-forming bodies of C.I. Acid Yellow 23 and C.I. Basic Red 1), VALIFAST GREEN 1501: (salt-forming body of C.I. Acid Yellow 42 and C.I. Basic Blue 1), VALIFAST VIOLET 1701 (salt-forming body of C.I.C.I. Acid Yellow 42 and C.I. Basic Violet 1), VALIFAST VIOLET 1704 (salt-forming body of C.I.Acid Yellow 36 and C.I. Basic Violet 1) available from Orient Chemical Industries Co., Ltd., a salt-forming dye obtained by synthesizing commercially available products [a salt-forming dye of Water Yellow 6C (available from Orient Chemical Industries Co., Ltd.: C.I. Acid Yellow 6 C) and Spillon Yellow C-GNH-new (available from Hodogaya Chemical Co., Ltd., basic dye)], a salt-forming dye of C.I. Acid Blue 9 and Spillon Yellow C-GNH-new (available from Hodogaya Chemical Co., Ltd.), and a salt-forming dye of C.I. Acid Blue 9 and C.I. Basic Violet 1.

### Colored resin particle

In the present invention, the colored resin particles are obtained by coloring resin particles by a salt-forming dye, which is the salt-forming body of the acid dye and the basic dye described above. Examples the colored resin particles include what are obtained by coloring acrylic resin particles, vinyl acetate resin particles, urethane resin particles, styrene-butadiene resin particles, or styrene-acrylonitrile resin particles by a salt-forming dye, which is the salt-forming body of the acid dye and the basic dye described above. Examples of these include various colored resin particles formed from at least one of raw material monomers selected from the group consisting of acrylic, vinyl acetate, urethane, styrene-butadiene, and styrene-acrylonitrile raw material monomers, and a salt-forming dye, which is the salt-forming body of the acid dye and the basic dye described above. Preferably, acrylic colored resin particles are desired from the merit of further stabilizing dyeing process, achieving high concentration and stability over time, and achieving superior color development by the salt-forming dye. Examples of the acrylic colored resin particles colored by the salt-forming dye include colored resin particles formed from at least a carboxyl group-containing vinyl monomer having a solubility in water of 10 mass% or less as an acid functional group, an ester monomer of acrylic acid or methacrylic acid and a linear or cyclic alcohol having 2 to 18 carbons, and a salt-forming dye, which is the salt-forming body of the acid dye and the basic dye described above.

The carboxyl group-containing vinyl monomer having a solubility in water of 10 mass% or less as an acid functional group that can be used is a color developing monomer and is not particularly limited as long as the carboxyl group-containing vinyl monomer is a vinyl monomer having an acid functional group of a carboxyl group and having a solubility in water of 10 mass% or less. Examples thereof include at least one selected from the group consisting of 2-methacryloyloxyethyl succinate [available from Mitsubishi Rayon Co., Ltd., acrylic ester SA, solubility in water: 1.86 mass%], 2-methacryloyloxyethyl maleate [available from Mitsubishi Rayon Co., Ltd., acrylic ester ML, solubility in water: 9.17 mass%], 2-methacryloyloxyethyl phthalate [available from Mitsubishi Rayon Co., Ltd., acrylic ester PA, solubility in water: 0.08 mass%], and 2-methacryloyloxyethyl hexahydrophthalate [available from Mitsubishi Rayon Co., Ltd., acrylic ester HH, solubility in water: 3.40 mass%]. Particularly preferably, use of 2-methacryloyloxyethyl phthalate is desired from the merit of compatibility with the salt-forming dye, which is the salt-forming body of the acid dye and the basic dye described above, and imparting more adequate color development.

When the carboxyl group-containing vinyl monomer having a solubility in water of 10 mass% or less is used, the proportion of the acid monomer in mixed monomers with the ester monomer can be increased, and thus the amount, which can be mixed into the vinyl monomer, of the salt-forming dye which is the salt-forming body of the acid dye and the basic dye described above becomes remarkably large, and as a result, colored resin particles having superior color development with stronger color by the salt-forming dye can be obtained.

The ester monomer of acrylic acid or methacrylic acid and a linear or cyclic alcohol having 2 to 18 carbon atoms is a backbone monomer and is an ester of acrylic acid or methacrylic acid and a linear or cyclic alcohol having 2 to 18 carbon atoms. Specific preferable examples include at least one of ethyl (meth)acrylate, propyl (meth)acrylate, isopropyl (meth)acrylate, n-butyl (meth)acrylate, isobutyl (meth)acrylate, t-butyl (meth)acrylate, hexyl (meth)acrylate, cyclohexyl (meth)acrylate, octyl (meth)acrylate, 2-ethylhexyl (meth)acrylate, lauryl (meth)acrylate, palmityl (meth)acrylate, stearyl (meth)acrylate, or behenyl (meth)acrylate. The "(meth)acrylic acid" represents "acrylic acid and/or methacrylic acid".

It is particularly preferable to use n-butyl (meth)acrylate, lauryl methacrylate, and cyclohexyl methacrylate, which further improve drying characteristic of drawn lines.

The production of the acrylic colored resin particles colored by the salt-forming dye can be performed by, for example, obtaining a water dispersion in which colored resin particles formed from at least the carboxyl group-containing vinyl monomer having a solubility in water of 10 mass% or less as an acid functional group, the ester monomer of acrylic acid or methacrylic acid and a linear or cyclic alcohol having 2 to 18 carbons, and the salt-forming dye which is the salt-forming body of the acid dye and the basic dye are dispersed in water, and drying this water dispersion. Furthermore, an aqueous ink composition for writing instruments of the present invention may be formed by using a water dispersion on the colored resin particles. As a specific example of the production method described above, production can be performed by dissolving the salt-forming dye, which is the salt-forming body of the acid dye and the basic dye, in mixed monomers containing the carboxyl group-containing vinyl monomer having a solubility in water of 10 mass% or less as an acid functional group and the ester monomer of acrylic acid or methacrylic acid and a linear or cyclic alcohol having 2 to 18 carbons, and performing emulsion polymerization by using ammonium persulfate, potassium persulfate, or hydrogen peroxide as a polymerization initiator or using a polymerization initiator further using a reducing agent in combination and, as necessary, further using a polymerizable surfactant. The dyeing described above is carried out simultaneously with the polymerization, but the dyeing may be carried out by dissolving the salt-forming dye after the polymerization.

At the time of emulsion polymerization, the emulsion polymerization may be performed by further mixing a dicyclopenta(te)nyl (meth)acrylate monomer in the carboxyl group-containing vinyl monomer component and the ester of acrylic acid or methacrylic acid and linear or cyclic alcohol having 2 to 18 carbons. With the polymer obtained by further mixing the dicyclopenta(te)nyl (meth)acrylate monomer followed by the emulsion polymerization, even if a moisture in the dispersion liquid is volatilized, the stability is less likely to be impaired, and a dispersion liquid of colored resin particles having superior stability and an aqueous ink composition for writing instruments can be obtained.

Note that the dicyclopenta(te)nyl (meth)acrylate monomer includes dicyclopentanyl acrylate monomer, dicyclopentenyl acrylate, dicyclopentanyl methacrylate monomer, and dicyclopentenyl methacrylate.

Furthermore, at the time of emulsion polymerization, the emulsion polymerization may be performed by mixing another hydrophobic vinyl monomer besides the components described above. The hydrophobic vinyl monomer that can be used is not particularly limited, and examples thereof include styrenes, such as styrene and methylstyrene. Furthermore, in the emulsion polymerization, a monomer having a reactive crosslinking group, such as an epoxy group, a hydroxymethylamide group, or an isocyanate group, or a polyfunctional monomer having two or more vinyl groups may be blended and crosslinked.

In the present invention, among the polymer component constituting the colored resin particles, the total content of the ester monomer and the carboxyl group-containing vinyl monomer is preferably 60 mass% or greater, and even more preferably 70 mass% to 100 mass%, in the polymer structure from the perspective of improving drying characteristic of drawn lines in addition to functions as a coloring material, such as color development, weatherability, and stability. Particularly preferably, the content of the carboxyl group-containing vinyl monomer is 40 mass% or greater, and the content of the ester monomer is desirably 20 mass% or greater.

Among the polymer components constituting the colored resin particles, in the case where the dicyclopenta(te)nyl (meth)acrylate monomer is further used, the content thereof is 1 to 25 mass%, and more preferably 5 to 15 mass%, from the perspectives of safety and further improvement of ink performance.

In the present invention, the content of the salt-forming dye is preferably 0.2 to 50 mass%, and more preferably 0.5 to 10 mass%, relative to the total amount of the monomers from the perspective of functions as a coloring material, such as color development, weatherability, and stability.

The polymerizable surfactant that can be used as required is not particularly limited as long as it is a polymerizable surfactant usually used for the emulsion polymerization. Examples of the polymerizable surfactant include at least one of the polymerizable surfactant including anionic or nonionic polymerizable surfactants such as Adekaria Soap NE-10, NE-20, NE-30, NE-40, and SE-10N, available from Adeka Corporation, Latemul S-180, S-180A, and S-120A, available from Kao Corporation, or Eleminor JS-20, available from Sanyo Chemical Industries, Ltd. The amount of the polymerizable surfactant to be used is preferably from 0 to 50 mass%, and more preferably from 0.1 to 50 mass%, based on the total amount of the monomers.

By the preferred embodiment described above, specifically, by dissolving the salt-forming dye in the mixed monomers at least containing 40 mass% or greater of the carboxyl group-containing vinyl monomer and 20 mass% or greater of the ester monomer as described above to perform emulsion polymerization or by dyeing by at least dissolving the salt-forming dye after the polymerization, a dispersion liquid of colored resin particles in which 20 to 50 mass% of colored resin particles as resin solid content is dispersed in water can be obtained, and by subjecting this to, for example, drying treatment, the colored resin particles can be obtained. Note that, in the case of use in an aqueous ink composition for writing instruments, the dispersion liquid of the colored resin particles obtained as described above may be used as is.

Note that, although the acrylic colored resin particles are described in detail above, the colored resin particles formed from the monomer raw materials and the salt-forming dye, which is the salt-forming body of the acid dye and the basic dye described above, can be produced even with vinyl acetate-based colored resin particles, urethane-based colored resin particles, styrene-butadiene-based colored resin particles, and styrene acrylonitrile-based colored resin particles.

The obtained colored resin particles described above have characteristics of having non-conventional, excellent color development, and are useful as a coloring material for an aqueous ink composition suitable for writing instruments such as felt-tip pens, marking pens, and ballpoint pens.

Furthermore, in the present invention, the average particle size of the obtained colored resin particles varies depending on monomer types, contents, and polymerization conditions in a moment of polymerization and is 1 µm or less, and clogging of a pen core of writing instruments, such as a felt-tip pen, a marking pen, or a ballpoint pen, does not occur Note that, in the present invention, "average particle size" refers to the value of the particle size at 50% cumulative volume in the particle size distribution (D50) calculated based on the volume measured by a laser diffraction method. Here, the measurement of average particle size by a laser diffraction method can be performed using, for example, a particle size distribution analyzer HRA 9320-X100 which is available from Nikkiso Co., Ltd.

### Aqueous ink composition for writing instruments

The aqueous ink composition for writing instruments of the present invention contains the colored resin particles colored by the salt-forming dye, which is the salt-forming body of the acid dye and the basic dye, the salt-forming body having the structure described above, and preferably further contains a water-soluble organic solvent and water.

The content of the colored resin particles varies depending on the type of writing instruments such as a felt-tip pen, a marking pen, and a ball-point pen, and, in terms of the resin solid content, is preferably 0.1 to 30.0 mass%, and more preferably 0.5 to 20.0 mass%, relative to the total amount of the ink composition.

The water-soluble organic solvent that can be used includes, for example, at least one of alkylene glycols such as ethylene glycol, triethylene glycol, tetraethylene glycol, propylene glycol, dipropylene glycol, 1,2-propanediol, 1,3-propanediol, 1,2-butanediol, 2,3-butanediol, 1,3-butanediol, 1,4-butanediol, 1,2-pentanediol, 1,5-pentanediol, 2,5-hexanediol, 3-methyl-1,3-butanediol, 2-methylpentane-2,4-diol, 3-methylpentane-1,3,5-triol, and 1,2,3-hexanetriol; polyalkylene glycols such as polyethylene glycol and polypropylene glycol; glycerols such as glycerol, diglycerol, and triglycerol; lower alkyl ethers of glycols such as ethylene glycol monomethyl ether, ethylene glycol monoethyl ether, diethylene glycol monomethyl ether, diethylene glycol monoethyl ether, and diethylene glycol mono-n-butyl ether; N-methyl-2-pyrrolidone, or 1,3-dimethyl-2-imidalizinone.

In addition, water-soluble solvents such as alcohols such as methyl alcohol, ethyl alcohol, isopropyl alcohol, n-butyl alcohol, tert-butyl alcohol, isobutyl alcohol, hexyl alcohol, octyl alcohol, nonyl alcohol, decyl alcohol, benzyl alcohol, and amides such as dimethylformamide and diethylacetamide, and ketones such as acetone may also be mixed.

The content of these water-soluble organic solvents varies depending on the kind of writing instruments such as felt-tip pens, marking pens, and ballpoint pens, and is from 1 to 40 mass% based on the total amount of the ink composition. The ink composition in which the content of the solvent is 10 mass% or less is particularly effective in terms of further improving a drying property of the drawn lines, and it is desired that the content is more preferably from 3 to 8 mass%.

Furthermore, the content of water (e.g., tap water, purified water, ion-exchanged water, distilled water, or pure water) is preferably 30 to 90 mass%, and more preferably 40 to 60 mass%, relative to the total amount of the ink composition.

In the aqueous ink composition for writing instruments of the present invention, depending on the types of writing instruments, for example, a preservative or a fungicide, a pH modifier, a defoamer, and a dispersing agent can be appropriately selected and used as necessary, as long as the effect of the present invention are not impaired. Examples of the pH adjuster include at least one of ammonia, urea, monoethanolamine, diethanolamine, triethanolamine, aminomethylpropanol, alkali metal salts of phosphoric acid and carbonic acid such as sodium tripolyphosphate and sodium carbonate, , or alkali metal hydroxides such as sodium hydroxide.

Examples of the preservative or fungicide include at least one of phenol, omadine sodium, sodium pentachlorophenol, 1,2-benzisothiazolin-3-one, 2,3,5,6-tetrachloro-4-(methylsulfonyl)pyridine, alkali metal salts of benzoic acid, sorbic acid and dehydroacetic acid, or benzimidazole compounds.

Examples of lubricant include at least one of phosphoric acid esters, polyalkylene glycol derivatives such as polyoxyethylene lauryl ether, fatty acid alkali salts, nonionic surfactants, fluorinated surfactants such as perfluoroalkyl phosphate esters, or polyether modified silicones such as polyethylene glycol adduct of dimethylpolysiloxane.

In the aqueous ink composition for writing instruments of the present invention composed as described above, the colored resin particles colored by the salt-forming dye, which is the salt-forming body of the acid dye having excellent color development and the basic dye, or the dispersion liquid thereof are contained, and thus the aqueous ink composition for writing instruments that is suitable for writing instruments, such as a felt-tip pen, a marking pen, or a ballpoint pen, can be obtained.

### Writing instrument

The writing instrument of the present invention is characterized by being loaded with the aqueous ink composition for writing instruments having the formulation described above.

Specifically, the aqueous ink composition for writing instruments having the formulation described above is loaded in a ballpoint pen, a marking pen, or the like provided with a pen tip such as a ballpoint pen tip, a fiber tip, a felt tip, or a plastic tip.

The ballpoint pen includes an instrument where the aqueous ink composition for writing instruments having the above-mentioned composition is accommodated in an ink container (refill) for a ballpoint pen having a ball of a diameter of 0.18 mm to 2.0 mm, and where a material which is not compatible with the aqueous ink composition and has a small specific gravity with respect to the aqueous ink composition, for example, polybutene, silicone oil, and mineral oil is accommodated in the ink container as an ink follower. Note that the structures of the ballpoint pen and the marking pen are not particularly limited, and the ballpoint pen and the marking pen may be, for example, a direct liquid type pen provided with a collector structure (ink holding mechanism) using a shaft cylinder itself as an ink container in which the shaft cylinder is filled with the aqueous ink composition for writing instruments having the formulation described above.

In the writing instrument configured as described above, because the aqueous ink composition for writing instruments having excellent color development as described above is charged, writing instruments, such as a felt-tip pen, a marking pen, or a ballpoint pen, having desired bright color (e.g., yellow, red, blue, or black) having excellent color development can be obtained.

### Examples

Next, the present invention will be described in more detail using Production Examples of the salt-forming dyes and the colored resin particles, Examples of the aqueous ink compositions for writing instruments and Comparative Examples, but the present invention is not limited to the following Examples.

### (Production Example 1)

In the moment of producing the colored resin particles described below, production of the salt-forming body (salt-forming dye) by mixing the acid dye and the basic dye and synthesis of the colored resin particles were successively performed, and thus colored resin particles 1 were obtained.

A 2-liter flask was equipped with a stirrer, a reflux condenser, a thermometer, a nitrogen gas inlet tube, and a 1000-mL separatory funnel for charging monomer, and was set in a hot water bath. 500 g of distilled water, 50 g of polymerizable surfactant ("Adekaria Soap SE-10N", available from Adeka Corporation), and 3 g of ammonium persulfate were charged into the flask, and the internal temperature was raised to 50°C while introducing nitrogen gas.

Meanwhile, a liquid in which 20 g of Water Yellow 6C (available from Orient Chemical Industries Co., Ltd.: Acid Yellow 6C) as an acid dye and 25 g of Spillon Yellow C-GNH-new (available from Hodogaya Chemical Co., Ltd.) as a basic dye were mixed to 500 g of mixed monomer consisting of 300 g of 2-methacryloyloxyethyl phthalate [available from Mitsubishi Rayon Co., Ltd., acrylic ester SA, solubility in water: 0.08 mass%] and 200 g of n-butylmethacrylate was prepared.

The prepared solution was added to the flask maintained at a temperature of about 50°C from the separatory funnel over 3 hours with stirring to carry out emulsion polymerization. Further, the solution was aged for 5 hours to terminate the polymerization, and thus a dispersion liquid of the colored resin particles was obtained.

### Production Example 2

Colored resin particles 2 were obtained in the same manner as in Production Example 1 above except that 20 g of C.I.Acid Blue 9 for the acid dye and 25 g of Spillon Yellow C-GNH-new (available from Hodogaya Chemical Co., Ltd.) for the basic dye were used in Production Example 1 above.

### Production Example 3

Colored resin particles 3 were obtained in the same manner as in Production Example 1 above except that 18 g of C.I.Acid Yellow 42 for the acid dye and 22 g of C.I.Basic Violet 1 for the basic dye were used in Production Example 1 above.

### Production Example 4

Colored resin particles 4 were obtained in the same manner as in Production Example 1 above except that, in place of 20 g of the acid dye (Water Yellow 6C (available from Orient Chemical Industries Co., Ltd.: Acid Yellow 6C)) and 25 g of the basic dye [Spillon Yellow C-GNH-new (available from Hodogaya Chemical Co., Ltd.)] of Production Example 1 above, 45 g of VALIFAST RED 1308 (salt-forming body of C.I.Acid Yellow 23 and C.I.Basic Red 1), available from Orient Chemical Industries Co., Ltd., was used for the salt-forming dye.

### Production Example 5

Colored resin particles 5 were obtained in the same manner as in Production Example 4 above except that using 45 g of VALIFAST RED 1320 (salt-forming body of C.I.Acid Yellow 42 and C.I.Basic Red 1), available from Orient Chemical Industries Co., Ltd., was used for the basic dye of Production Example 4 above.

### Production Example 6

Colored resin particles 6 were obtained in the same manner as in Production Example 4 above except that 45 g of VALIFAST GREEN 1501 (salt-forming body of C.I.Acid Yellow 42 and C.I.Basic Blue 1), available from Orient Chemical Industries Co., Ltd., was used for the basic dye of Production Example 4 above.

### Production Example 7

Colored resin particles 7 were obtained in the same manner as in Production Example 4 above except that 45 g of VALIFAST VIOLET 1701 (salt-forming body of C.I.Acid Yellow 42 and C.I.Basic Violet 1), available from Orient Chemical Industries Co., Ltd., was used for the basic dye of Production Example 4 above.

### Production Example 8

Colored resin particles 8 were obtained in the same manner as in Production Example 1 above except that 45 g of VALIFAST VIOLET 1704 (salt-forming body of C.I.Acid Yellow 36 and C.I.Basic Violet 1), available from Orient Chemical Industries Co., Ltd., was used for the basic dye of Production Example 4 above.

### Comparative Production Example 1

Colored resin particles 9 were obtained in the same manner as in Production Example 1 above except that not 25 g of the basic dye [Spillon Yellow C-GNH-new (available from Hodogaya Chemical Co., Ltd.)] of Production Example 1 above but 40 g of an acid dye (Water Yellow 6C (available from Orient Chemical Industries Co., Ltd.: Acid Yellow 6C)) was used.

### Comparative Production Example 2

Colored resin particles 10 were obtained in the same manner as in Production Example 2 above except that not 25 g of the basic dye [Spillon Yellow C-GNH-new (available from Hodogaya Chemical Co., Ltd.)] of Production Example 2 above but 45 g of an acid dye C.I.Acid Blue 9 was used.

### Comparative Production Example 3

Colored resin particles 11 were obtained in the same manner as in Production Example 3 above except that not 22 g of the basic dye [C.I.Basic Violet 1] of Production Example 3 above but 45 g of an acid dye C.I.Acid Yellow 42 was used.

### Comparative Production Example 4

Colored resin particles 12 were obtained in the same manner as in Production Example 4 above except that 45 g of an acid dye C.I.Acid Yellow 23 in place of the salt-forming dye (VALIFAST RED 1308) of Production Example 4 above was used.

### Comparative Production Example 5

Colored resin particles 13 were obtained in the same manner as in Production Example 8 above except that 45 g of an acid dye C.I.Acid Yellow 36 in place of the salt-forming dye (VALIFAST VIOLET 1704) of Production Example 8 above was used.

### Examples 1 to 8 and Comparative Examples 1 to 5: Preparation of aqueous ink composition for writing instrument

Using a dispersion liquid of the colored resin particles each obtained in Production Examples 1 to 8 and Comparative Production Examples 1 to 5 described above and according to the composition listed below, each of aqueous ink compositions for writing instruments was prepared by an ordinary method.

The dispersion liquid of the colored resin particles for aqueous ink had an average particle size in a range of 30 to 500 nm and a resin content in a range of 30 mass%.

### Formulation

Dispersion liquid of colored resin particles for aqueous ink 50 mass%
pH modifier (triethanolamine) 1 mass%
Water-soluble organic solvent (ethylene glycol) 5 mass%
Ion exchanged water 44 mass%

For each of the obtained aqueous ink compositions for writing instruments (total amount: 100 mass%), a marking pen was prepared as a writing instrument by the following method, and the color development was evaluated by the following evaluation method.

The evaluation results of Examples 1 to 8 and Comparative Examples 1 to 5 are shown in the following Table 1.

### Preparation of Writing Instrument: Marking Pen

A marking pen (trade name: Propus Window PUS-102T, available from Mitsubishi Pencil Co., Ltd., pen tip, large: PE resin, small: PET fiber) was prepared by loading each of the aqueous ink compositions produced in Examples 1 to 8 and Comparative Examples 1 to 5 described above.

### Evaluation method for color development

Writing was made on PPC paper using each of the marking pens loaded with the ink compositions prepared in Examples 1 to 8 and Comparative Examples 1 to 5 obtained above, and evaluation was performed based on the following evaluation criteria.

Evaluation criteria:
A: Color development with high density
B: Color development with somewhat low density
C: Coloration incomplete or with low density

**[Table 1]**

| | Examples | | | | | | | | Comparative Examples | | | | |
|---|---|---|---|---|---|---|---|---|---|---|---|---|---|
| | 1 | 2 | 3 | 4 | 5 | 6 | 7 | 8 | 1 | 2 | 3 | 4 | 5 |
| Colored Resin Particle No. (Production Examples 1 to 8 and Comparative Production Examples 1 to 5) | 1 | 2 | 3 | 4 | 5 | 6 | 7 | 8 | 9 | 10 | 11 | 12 | 13 |
| Color Development | A | A | A | A | A | A | A | A | C | C | C | C | C |

Considering the results shown in Table 1 above, it has been found that the aqueous ink compositions for writing instruments having excellent color development were successfully formed in Examples 1 to 8, which fall in the scope of the present invention, compared to Comparative Examples 1 to 5, which are outside the scope of the present invention.

### Industrial Applicability

The aqueous ink composition for writing instruments suitable for use in writing instruments, such as felt-tip pens, marking pens, and ballpoint pens, is provided.

## Claims

1. An aqueous ink composition for writing instruments, **characterized in that** it comprises a colored resin particle colored by a salt-forming dye, which is a salt-forming body of an acid dye and a basic dye.

2. A writing instrument which is loaded with the aqueous ink composition for writing instruments according to claim 1.
